(19) **Europäisches Patentamt**
**European Patent Office**
**Office européen des brevets**

(11) **EP 1 678 279 B1**

(12) **EUROPEAN PATENT SPECIFICATION**

(45) Date of publication and mention
of the grant of the patent:
**19.12.2012 Bulletin 2012/51**

(51) Int Cl.:
***C10J 3/00*** ***(2006.01)***

(21) Application number: **03758455.4**

(86) International application number:
**PCT/IB2003/004803**

(22) Date of filing: **30.10.2003**

(87) International publication number:
**WO 2005/042673 (12.05.2005 Gazette 2005/19)**

(54) **METHOD FOR PREDICTING AMOUNT OF GAS PRODUCED DURING COAL GASIFICATION**

VERFAHREN ZUR VORHERSAGE DER GASMENGE HERGESTELLT IN EINEM
VERGASUNGSVERFAHREN

PROCEDE DE PREDICTION DE LA QUANTITE DE GAZ PRODUIT LORS DE LA GAZEIFICATION
DU CHARBON

(84) Designated Contracting States:
**AT BE BG CH CY CZ DE DK EE ES FI FR GB GR
HU IE IT LI LU MC NL PT RO SE SI SK TR**

(43) Date of publication of application:
**12.07.2006 Bulletin 2006/28**

(73) Proprietor: **Council of Scientific and Industrial
Research
New Delhi 110 001 (IN)**

(72) Inventors:
• **MALL, Barun Kumar
Dhanbad,
828108 Jharkhand (IN)**
• **Rajiv Anant Sohony
Nagapur 44 00 15 (IN)**

• **RAO, Sukuru Ramakrishna
Dhanbad,
828108 Jharkhand (IN)**
• **BASU, Sibendra Kumar
Dhanbad,
828108 Jharkhand (IN)**
• **SEN, Kalyan
Kolkata- 700047 (WB) (IN)**

(74) Representative: **Becker Kurig Straus
Bavariastrasse 7
80336 München (DE)**

(56) References cited:
WO-A1-02/01304       US-A- 4 489 562
US-A- 5 347 446       US-A- 5 563 803
US-A- 6 022 387       US-B1- 6 249 712
US-B1- 6 459 939      US-B1- 6 522 994

**Description**

**Field of the Invention:**

The present invention relates to a method for predicting amount of gas produced during coal gasification in a coal gasification reactor and unit heat content of the gas thus produced. The method of the present invention finds its usage in judging the gasification as well as thermal potential of gas produced during coal gasification before it is utilized. The method of the present invention is also useful in initiation of gasification reactor design for coals of varying ash content.

**Background and Prior Art Description:**

Low Calorific Value Fuel Gas (having calorific value below 2000 kcal/Nm$^3$) is obtained by blowing a mixture of air and steam through an incandescent bed (fixed or fluidized) of coal at atmospheric or elevated pressures under various operating conditions. Swuch gases can be efficiently utilized for heating and power generation through combined power cycle. Conversion of coal, char, or coke to a gaseous product by reaction with heated air, oxygen, steam, or carbon dioxide or mixtures of these comprise the well known process called coal gasification. The product of coal gasification is a mixture containing hydrogen and carbon monoxide and varying amount of nitrogen, carbon dioxide, steam, hydrogen sulfide, methane, organic sulfur compounds, and possibly tar and dust, depending on the gasification process and reactants employed. Exact composition of the furl gas depends on the nature of the parent coal, composition of air-steam blast and operating conditions. Like other fuels, gaseous fuels having low calorific value appear to be more attractive than liquid/solid fuels due to absence of mineral impurities, consistency of quality, convenience and efficiency in use and low cost of handling. Coal based low calorific value gas have been principally accepted by the planners in replacing fuel oils for its operational ease and cheaper cost of production compared to other methods of gas making.

Gasification technologies have been the driving force for power industries in developing environmentally acceptable and economically competitive alternatives to conventional power generation. Development of such efficient and cost effective processes for gasification of high ash Indian coals has opened up useful avenues for rapid industrial growth in the country, especially in the areas of power generation and manufacture of synthetic chemicals.

Processes have been investigated for coal gasification at atmospheric and elevated pressures for nearly a century, but many problems still remain that inhibit efficient gas production. There is a tendency for coal to form a sticky agglomerating surface; the result of the tar and asphalt fractions of coal forming exudates when the coal is heated, and gasifiers that utilize coals with high free swelling indexes have been plagued with problems of coal clumping and caking. Since the typical gasifier is a counterflow device, whereby the coal flows downward under the force of gravity, while air and steam used to heat and gasify the coal move upward through the coal bed, raw coal is fed to a relatively cool zone in the upper portion of the gasifier near where coal gases and other volatiles leave the device. This aggravates the swelling and caking characteristics of coal.

The conventional Lurgi pressure gasifier comprises a pressure vessel having at its upper end a coal lock hopper through which sized coal is introduced under pressure. The coal bed is stirred at its upper end to maintain porosity of the devolatilization zone and to break up any forming agglomerates. The coal is heated to between 1800°F and 2300°F by adding heated steam and oxygen at the lower end of the pressure vessel. A rotating grate is disposed within the lower end of the pressure vessel and is charged with coal to be gasified. The Lurgi gasifier has a major disadvantage in that the raw gas outlet is very near the top of the coal bed so that tars and fine grained dust and coal can be entrained within the exhaust stream of the gasifier.

The Morgantown Energy Technology Center (METC) gasifier is based on a similar concept, in which the coal is introduced at the top and air/steam are introduced at the bottom in a countercurrent manner. Typically, a pressurized lock hopper supplies coal to a variable speed rotary feeder which dispenses coal to a screw feeder. The screw feeder runs at a constant speed which is fast enough so that it always moves the coal into the volume of the pressure vessel before it can be hot enough to become sticky and initiate blockage. A water cooled, hydraulically driven, three blade stirrer is used to maintain bed porosity and provide capability to utilize strongly caking coals. As with the Lurgi gasifiers, tars and fines exist in the product gas. More importantly, the METC design requires a deep bed stirring function. This imposes complex forces on the bearing and pressure seal design for the water cool shaft which both slowly rotates and translates as it penetrates the gasifier pressure vessel.

Use of highly caking coals in these conventional coal gasifiers results in decreased throughput and therefore gasification output is drastically reduced at times to less than half the full load capacity. This is the direct result of the sticky, swelling coal which forces the gas path to short circuit through cracks within the coal bed. This short-circuiting is called "channeling" and is a significant problem because it ruins the necessary gas to coal contact and interaction that are needed to carry out efficient gasification reactions.

If the heating of coal could be performed at temperatures high enough to hasten the transient time through the gasification device, the swelling process itself could be limited even for highly caking coals. Therefore, it would be useful to provide a coal gasification process which allows the coal to become devolatilized by heating without agglomeration and subsequent channeling.

A coal gasification reactor within agglomerated coal ash is withdrawn from a fluidized reaction bed of finely divided coal without the removal of the finely divided coal particles is described in Jequier et al, U.S. Pat. No. 2,906,608, the teachings of which is incorporated by reference herein. In a coal to gas conversion process of the type described in Jequier et al, a vessel is provided to contain a fluidized bed. A gas distribution grid is usually positioned in the bottom of the vessel to define the bottom surface of the fluidized bed. The central portion of the grid may be conical or cylindrical in shape and comprises a downwardly extending passage. At the bottom of the passage, a constriction is provided having an opening defining a venturi of fixed throat size to guide the gas passing into the vessel upwards into the fluidized bed. A stream of high velocity gas is directed through the venturi or passage into the reaction vessel, causing ash particles to agglomerate in the bottom portion of the vessel and eventually discharge downwardly through the passage and venturi throat. Jequier et al, at column 3, lines 7-10, teaches that "it is desirable that the gasification agents should have a speed perpendicular to the smallest section of the venturi and at this point they should not have any helicoidal movement." It has been discovered that a direct upward passage of fluid through the venturi does not provide the most efficient rate of solid discharge through the venturi. Improved solids discharge or removal can be obtained through provision of ridges or other devices to permit the descent of agglomerated ash.

In Schora et al, U.S. Pat. No. 4,023,280 and Patel et al, U.S. Pat. No. 4,057,402, the environment in which the claimed invention could operate and some of the problems associated with a classifier for a fluidized bed ash agglomerating gasifier are described. Schora et al, discloses an apparatus and method for varying the cross-sectional area of the venturi input in a fluidized bed retained within a vessel.

With respect to Patel et al, a process for gasifying carbonaceous feed materials is disclosed. Both patents utilize a venturi which has a smooth internal surface which provides for a combination of agglomerate release but at undesirably low agglomerate flow rates and evidencing incomplete separation of ash from unreacted hydrocarbonaceous material, such as char. Keyser, U.S. Pat. No. 3,636,983, Willis, U.S. Pat. No. 3,693,329 and Galliot, U.S. Pat. No. 2,017,043, describe fluid flow arrangements in hollow pipes in which a spiral angular velocity is imparted to the fluid by the use of ridges disposed within a pipe. None of the Keyser, Willis or Galliot patents contemplates the passage and agglomeration of particulate matter, such as agglomerated ash, falling by force of gravity countercurrent to a high temperature gas flow, nor the problems associated with ash agglomeration as encountered by applicant. A problem associated with the apparatus as illustrated in Jequier et al is that extremely high temperatures are present in the defined conical withdrawal section. In addition, since the abrasive agglomerated ash particles are in constant physical contact with the walls of the cone and because of the high temperatures present therein, expensive alloys are required to manufacture a long lasting withdrawal cone. More importantly, since the gas stream that surrounds the ash agglomerates is the same as the stream separating or classifying the agglomerates from the fluidized bed, unusual restrictions are imposed on the rate and composition of gas flow. In addition to undesirable intering taking place in the venturi, the nozzle can plug, particular when fine coal material, as recovered from product gases, is recycled back to the fluidized bed through the venturi nozzle. Because the plugging occurs in a confined zone of high temperature, a fused adherent mass, if it forms, can lead to an undesired premature reactor shutdown.

Reference may be made to US Patent No. 5145490 wherein the combustion of gas produced from the combination of coal pyrolysis and gasification involves combining a combustible gas coal and an oxidant in a pyrolysis chamber and heating the components to a temperature of at least 1600°F. The products of coal pyrolysis are dispersed from the pyrolyzer directly into the high temperature gasification region of a pressure vessel. Steam and air needed for gasification are introduced in the pressure vessel and the materials exiting the pyrolyzer flow down through the pressure vessel by gravity with sufficient residence time to allow any carbon to form carbon monoxide. Gas produced from these reactions are then released from the pressure vessel and ash is disposed of.

In all above cases, there is a growing need to predict the gasification potential of coal and possible heat content of gas produced for selection of coal for its envisaged end use. Presently, there is no reference available for such quick prediction. In coal gasification, coal is converted into fuel gas /product gas by passing air and steam or oxygen and steam through the coal bed at an elevated temperature and atmospheric or elevated pressure. Coal gasification is carried out in mainly three types of gasifiers, namely, Moving/Fixed bed, Fluidised bed and Entrained bed. Coal gasification finds its applications in power generation and syn gas production for production of chemicals and fertilizers.

In case of the oxygen-steam blown gasifiers, product gas finds its application for syn gas generation for chemicals and fertilizers production and also for power generation through IGCC. However, it requires an oxygen plant in addition to the main gasifier.

In case of the air-steam blown gasifiers, product gas finds its application mainly for power generation through IGCC. Fuel gas generated in air-steam blown gasifiers has low calorific value compared to that of product gas generated in oxygen -steam blown gasifiers.

Air-steam blown gasifier is presently getting more attention due to its lower capital requirement. However, air-steam blown gasification process employ only fluidised or moving/fixed bed gasifier.

Coals of different regions vary widely in their properties. In order to utilize these coals for gasification, it is mandatory to know their gasification potential. Determination of gasification potential needs proper experimentation, which is not always possible due to time and financial constraints. There is a growing need to predict the gasification potential of coal and possible heat content of gas produced for selection of coal for its envisaged end use. Presently, there is no reference available for such quick prediction.

**Summary of the Invention:**

The present invention deals with air-steam blown coal gasification process. It relates to a method for prediction of gas production and unit heat content of gas as function of properties of coal and process condition. This invention finds its usage in judging the gasification as well as thermal potential of a gas produced during coal gasification before its utilisation. It is also useful in initiation of gasifier design for coals of varying properties. The prediction of gas production will be basis for any gasifier design. The prediction of heat content will give an idea about the heat content in the gas produced, which may decide ultimately the potential of coal in use.

**Detailed Description of the Present Invention:**

Accordingly, the present invention provides a method for predicting amount of gas produced (G) during coal gasification in a coal gasification reactor and unit heat content of the gas thus produced (H), said method comprising the steps of:

(a) obtaining reactor data relating to:

(i) Carbon Content of the coal used in wt. % (CC);
(ii) Mineral Matter content of the coal used in wt. % (AMM);
(iii) Amount of air fed for gasification in $Nm^3/Kg$ of coal (AIR), and
(iv) Steam required in Kg/Kg of coal used (ST).

(b) estimating the values of constants involved in prediction, $K_1$ to $K_8$ and $P_1$ to $P_8$ by least square minimization method, and
(c) predicting the amount of gas produced (G) during gasification in $Nm^3/Kg$ of coal fed using the correlation function:

$$G = K_1\,[CC]^{P1} + K_2\,[AMM]^{P2} + K_3\,[AIR]^{P3} + K_4\,[ST]^{P4}$$

predicting the unit heat content of the gas produced (H) in kcal/kg of coal fed during gasification using the correlation function:

$$H = K_5\,[CC]^{P5} + K_6\,[AMM]^{P6} + K_7\,[AIR]^{P7} + K_8\,[ST]^{P8}$$

In an embodiment of the present invention wherein in step (b), the values of the constants involved in prediction, $K_1$ to $K_8$ and $P_1$ to $P_8$ are estimated Marquafi's Method of nonlinear parametric estimation.
In another embodiment of the present invention, the values of the constants involved in prediction, $K_1$ to $K_8$ and $P_1$ to $P_8$ are pre-calculated for a particular coal gasification reactor.
In yet another embodiment of the present invention, the values of the constants involved in prediction, $K_1$ to $K_8$ and $P_1$ to $P_8$ are calculated on a pilot plant.
In still another embodiment of the present invention, the values of the constants involved in prediction, $K_1$ to $K_8$ and $P_1$ to $P_8$ are estimated by:

(a) reading plant data CC, AMM, AIR, ST, amount of gas produced during experiments $G_{(exp)}$ and heat content of the gas produced during experiments $H_{(exp)}$ for M set of points;
(b) making initial guesses for $K_1$ to $K_4$ and $P_1$ to $P_4$, substituting these initial guesses in the correlation function:

$$G_{(cal)} = K_1 [CC]^{P1} + K_2 [AMM]^{P2} + K_3 [AIR]^{P3} + K_4 \{ST\}^{P4};$$

and making initial guesses for $K_5$ to $K_8$ and $P_5$ to $P_8$, substituting these initial guesses in the correlation function:

$$H_{(cal)} = K_5 [CC]^{P5} + K_6 [AMM]^{P6} + K_7 [AIR]^{P7} + K_8 [ST]^{P8};$$

Wherein $G_{(cal)}$ and $H_{(cal)}$ are calculated values of amount of gas produced and heat content of the gas produced
(c) calculating the least square difference ($\varphi$) between $G_{(cal)}$ and $G_{(exp)}$; $H_{(cal)}$ and $H_{(exp)}$ for M set of points, and
(d) accepting the estimated constants if the same fall under acceptable limits or repeating the steps (b) and (c).

In one more embodiment of the present invention wherein in step (d)', the acceptable limit is $\pm 10\%$.

**Brief description of the Accompanying Drawings:**

In the drawings accompanying the specification,

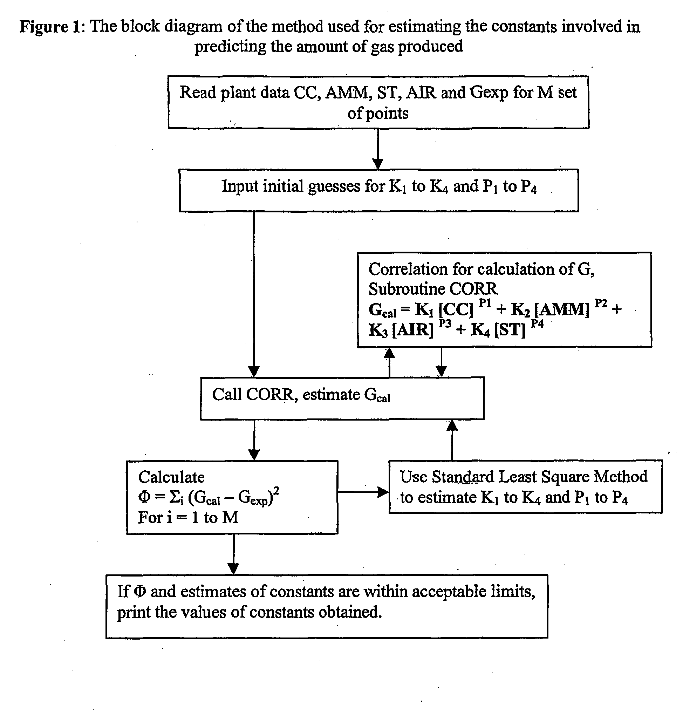

**Figure 1** represents the block diagram of the method used for estimating the constants involved in predicting the amount of gas produced.

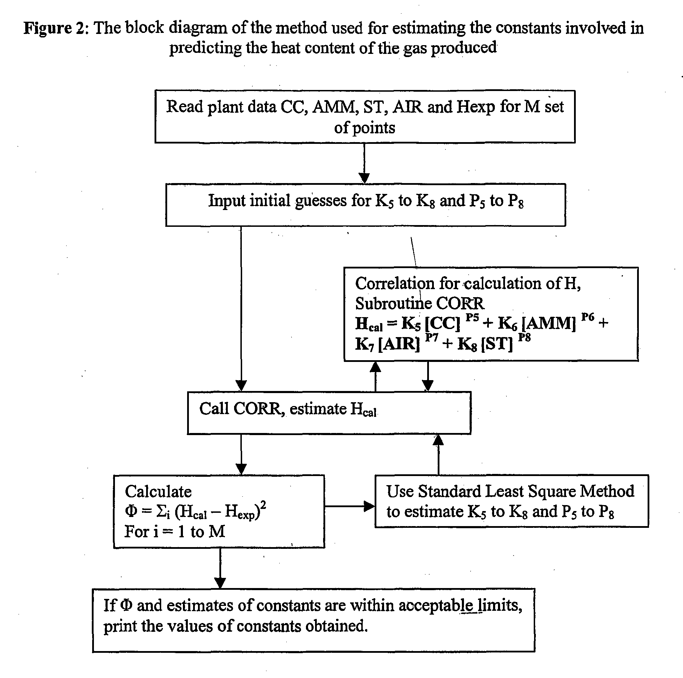

**Figure 2** represents the block diagram of the method used for estimating the constants involved in predicting the heat content of the gas produced.

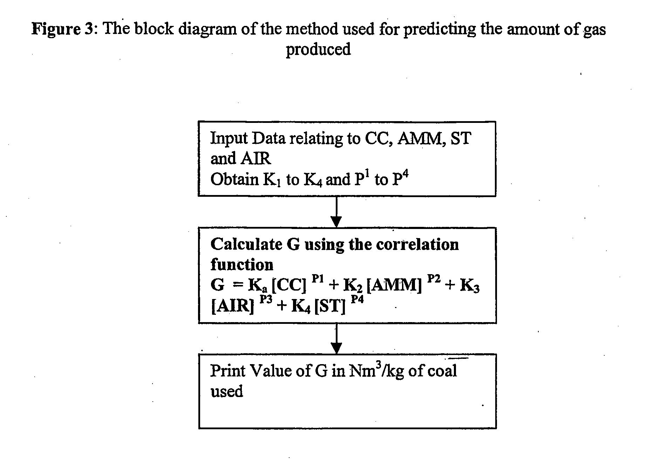

**Figure 3** represents the block diagram of the method used for predicting the amount of gas produced.

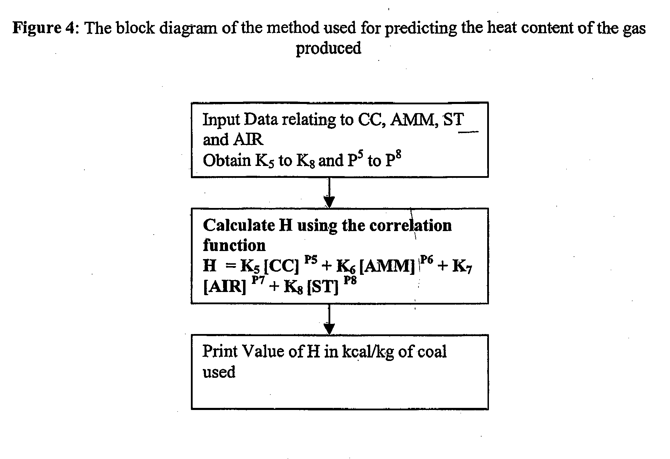

**Figure 4** represents the block diagram of the method used for predicting the heat content of the gas produced.

The present invention is further described in detail in the following paragraph, which are given by way of illustration and hence, should not be construed to limit the scope of the present invention in any manner.

**Example 1**

The algorithm used for estimating the constants involved in prediction of gas produced is described here below:

1. Read plant data by way of carbon content (CC), mineral matter (AMM), steam in kg/kg of coal fes (ST), Air fed (AIR) in $Nm^3$/kg of coal and the gas produced in $Nm^3$/kg of coal fed, as actually obtained from the plant ($G_{(exp)}$).
2. Assume the relationship like:

$$G_{(cal)} = K_1 [CC]^{P1} + K_2 [AMM]^{P2} + K_3 [AIR]^{P3} + K_4 \{ST\}^{P4}$$

Where G is the amount of gas produced.
3. To start the algorithm, assume initial guesses for $K_1$ to $K_4$ and $P_1$ to $P_4$ and calculate $G_{(cal)}$.
4. Compare the estimated amount of gas produced ($G_{(cal)}$) with the experimental data ($G_{(exp)}$), then by standard method of least square minimization actual values of $K_1$ to $K_4$ and $P_1$ to $P_4$ are obtained.

**Example 2**

The algorithm used for estimating the constants involved in prediction of heat content of the gas produced is described here below:

(a) Read plant data by way of carbon content (CC), mineral matter (AMM), steam in kg/kg of coal fes (ST), Air fed (AIR) in $Nm^3$/kg of coal and the heat in the gas produced in $Nm^3$/kg of coal fed, as actually obtained from the plant ($H_{(exp)}$).
(b) Assume the relationship like:

$$H_{(cal)} = K_5 \, [CC]^{P5} + K_6 \, [AMM]^{P6} + K_7 \, [AIR]^{P7} + K_8 \, [ST]^{P8}$$

Where H is the heat content of the gas produced.

(c) To start the algorithm, assume initial guesses for $K_5$ to $K_8$ and $P_5$ to $P_8$ and calculate $H_{(cal)}$.

(d) Compare the estimated heat content of the gas produced ($H_{(cal)}$) with the experimental data ($H_{(exp)}$), then by standard method of least square minimization actual values of $K_5$ to $K_8$ and $P_5$ to $P_8$ are obtained.

## Example 3

The algorithm used for predicting the amount of gas produced is described here below:

1. Obtain $G_{(cal)}$ value from Example 1.
2. Input the plant data values for carbon content (CC), mineral matter (AMM), steam in kg/kg of coal fes (ST) and Air fed (AIR) in $Nm^3$/kg of coal.
3. predict the amount of gas produced during gasification in $Nm^3$/Kg of coal fed using the correlation function:

$$G = K_1 \, [CC]^{P1} + K_2 \, [AMM]^{P2} + K_3 \, [AIR]^{P3} + K_4 \, [ST]^{P4}$$

## Example 4

The algorithm used for predicting the heat content of the gas produced is described here below:

1. Obtain $H_{(cal)}$ value from Example 2.
2. Input the plant data values for carbon content (CC), mineral matter (AMM), steam in kg/kg of coal fes (ST) and Air fed (AIR) in $Nm^3$/kg of coal.
3. predict the unit heat content of the gas produced in kcal/kg of coal fed during gasification using the correlation function:

$$H = K_5 \, [CC]^{P5} + K_6 \, [AMM]^{P6} + K_7 \, [AIR]^{P7} + K_8 \, [ST]^{P8}$$

## Example 5

Different types of coals were used in a pilot plant and the values of the constants involved in the prediction were calculated. Then these constants were used for predicting the amount of gas produced and the heat content of the gas produced for a fresh batch of coal. The results of the experiments are tabulated in Tables 1 and 2.

The results show that the correlation developed predict the values of G and H within ±10%.

## Advantages of the Present Invention:

1. The amount of the gas produced and the heat content of the gas produced are determined without actually using them.
2. The calculated value of the amount of gas produced fall within the permissible range of the actual value of the gas produced. The maximum deviation between the calculated value and the actual value is 5.69 % and the minimum deviation between the calculated value and the actual value is 0.65%.
3. The calculated value of the heat content of the gas produced fall within the permissible range of the actal value of the heat content of the gas produced. The maximum deviation between the calculated value and the actual value is 9.29% and the minimum deviation between the calculated value and the actual value is 0.28%.

**Table 1: Comparison of coal used in example 5 and comparison of prediction with experimental data**

| Coal Type | I | II | III | IV | V | VI | VII | VIII | IX | X | XI |
|---|---|---|---|---|---|---|---|---|---|---|---|
| A | 36.81 | 49.06 | 1.74 | 0.25 | 1232 | 2.23 | 2747 | 2.16 | 2.89 | 2617 | 4.73 |
| B | 38.88 | 44.22 | 1.68 | 0.30 | 1139 | 2.06 | 2346 | 2.18 | -5.69 | 2506 | -6.81 |
| C | 47.11 | 36.50 | 1.60 | 0.29 | 1236 | 2.40 | 2966 | 2.30 | 4.23 | 2852 | 3.85 |

(continued)

| Coal Type | I | II | III | IV | V | VI | VII | VIII | IX | X | XI |
|---|---|---|---|---|---|---|---|---|---|---|---|
| D | 51.89 | 32.56 | 1.80 | 0.33 | 1221 | 2.60 | 3190 | 2.55 | 1.77 | 3183 | -0.28 |
| E | 54.70 | 32.67 | 1.87 | 0.34 | 1287 | 2.67 | 3436 | 2.65 | 0.69 | 3473 | -1.07 |
| F | 54.70 | 32.67 | 2.03 | 0.34 | 1246 | 2.63 | 3277 | 2.78 | -5.41 | 3418 | -4.32 |
| G | 56.45 | 22.22 | 1.91 | 0.34 | 1300 | 2.94 | 3822 | 2.82 | 4.17 | 3536 | 7.48 |
| H | 56.71 | 27.72 | 1.86 | 0.35 | 1303 | 2.76 | 3596 | 2.72 | 1.42 | 3642 | -1.26 |
| I | 56.71 | 27.72 | 1.96 | 0.32 | 1292 | 2.83 | 3656 | 2.80 | 1.20 | 3560 | 2.63 |
| J | 59.81 | 20.10 | 1.28 | 0.72 | 1904 | 2.65 | 5046 | 2.67 | -0.80 | 4791 | -0.32 |
| K | 59.90 | 20.90 | 1.64 | 0.20 | 1400 | 2.57 | 3598 | 2.69 | -4.76 | 3857 | -7.20 |
| L | 59.90 | 20.90 | 1.64 | 0.24 | 1520 | 2.72 | 4134 | 2.69 | 1.02 | 3912 | 5.38 |
| M | 60.77 | 22.44 | 1.62 | 0.73 | 1502 | 3.02 | 4536 | 2.69 | 0.65 | 4780 | -9.29 |

## Table 2: Clarification of the Notations in Table 1

| Column No. | Item |
|---|---|
| I | CC% |
| II | AMM% |
| III | AIR ($Nm^3$kg of coal) |
| IV | ST, kg/kg of coal |
| V | CV, $kcal/Nm^3$ |
| VI | $Nm^3$/kg of coal |
| VII | cv*gas, kcal/kg of coal |
| VIII | G cal, $Nm^3$/kg of coal |
| IX | % diff in G |
| X | H cal, kcal/kg of coal |
| XI | % diff in H |
| | |
| | |

| Row No. | Coal type |
|---|---|
| A | Dakra Seam |
| B | Jhingurdah |
| C | Rajmahal |
| D | Nambad |
| E | New ghusic VIII |
| F | New ghusic VII |
| G | Dakra Seam Washed |
| H | J.K. Nagar XI |
| I | J.K. Nagar X |
| J | Bengal Bihar Region I |
| L | Bengal Pottery XI |
| K | Bengal Pottery XIA |
| M | Bengal Bihar Region II |

## Claims

1. A method of predicting in advance an amount of low calorific value fuel gas producible during coal gasification in a coal gasification reactor and the unit heat content of the fuel gas thus produced, said method comprising the steps of:

    (a) obtaining reactor data relating to:

        (i) Carbon Content of the coal used in wt. % (CC);
        (ii) Mineral Matter content of the coal used in wt. % (AMM);
        (iii) Amount of air fed for gasification in $Nm^3$/Kg of coal (AIR), and
        (iv) Steam required in Kg/Kg of coal used (ST);

    (b) estimating the values of constants involved in prediction, $K_1$ to $K_8$ and $P_1$ to $P_8$ by least square minimization method, wherein values of the constants $K_1$ to $K_8$ and $P_1$ to $P_8$ are estimated by:

7

(i) reading plant data CC, AMM, AIR, ST, $G_{(exp)}$ and $H_{(exp)}$ for M set of points;
(ii) making initial guesses for $K_1$ to $K_4$ and $P_1$ to $P_4$, substituting these initial guesses in the correlation function:

$$G_{(cal)} = K_1 [CC]^{P1} + K_2 [AMM]^{P2} + K_3 [AIR]^{P3} + K_4 [ST]^{P4}$$

and
making initial guesses for $K_5$ to $K_8$ and $P_5$ to $P_8$, substituting these.initial guesses in the correlation function:

$$H_{(cal)} = K_5 [CC]^{P5} + K_6 [AMM]^{P6} + K_7 [AIR]^{P7} + K_8 [ST]^{P8}$$

(iii) calculating the least square difference ($\varphi$) between $G_{(cal)}$ and $G_{(exp)}$; $H_{(cal)}$
and $H_{(exp)}$ for M set of points, and
(iv) accepting the estimated constants if the same fall under acceptable limits or repeating the steps (b) and (c)
and

(c) predicting the amount of gas produced during gasification in $Nm^3$/Kg of coal fed using the correlation function:

$$G = K_1 [CC]^{P1} + K_2 [AMM]^{P2} + K_3 [AIR]^{P3} + K_4 [ST]^{P4}$$

predicting the unit heat content of the gas produced in kcal/kg of coal fed during gasification using the correlation function:

$$H = K_5 [CC]^{P5} + K_6 [AMM]^{P6} + K_7 [AIR]^{P7} + K_8 [ST]^{P8}$$

2. A method as claimed in claim 1, wherein the values of the constants involved in prediction, $K_1$ to $K_8$ and $P_1$ to $P_8$ are pre-calculated for a particular coal gasification reactor.

3. A method as claimed in claim 1, wherein the values of the constants involved in prediction, $K_1$ to $K_8$ and $P_1$ to $P_8$ are calculated on a pilot plant.

4. A method as claimed in claim 1 wherein in step (b)(iv), the acceptable limit is $\pm 10\%$.

**Patentansprüche**

1. Verfahren zur Vorhersage einer Menge von heizwertarmem Brenngas, das während einer Kohlevergasung in einem Kohlevergasungsreaktor produzierbar ist, und des Einheits-Wärmeinhalts des dadurch produzierten Brenngases, wobei das Verfahren die Schritte umfasst:

(a) Erhalten von Reaktordaten betreffend:

(i) Kohlenstoffgehalt der verwendeten Kohle in Gewichtsprozent (CC)
(ii) Mineralstoffgehalt der verwendeten Kohle in Gewichtsprozent (AMM)
(iii) Menge an Luft, die zur Vergasung zugeführt wurde, in $Nm^3$/Kg Kohle (AIR), und
(iv) benötigten Dampf in Kg/Kg verwendeter Kohle (ST);

(b) Abschätzen der Werte der Konstanten, die in die Vorhersage einbezogen sind, $K_1$ bis $K_8$ und $P_1$ bis $P_8$ durch ein Fehlerquadratminimierungsverfahren, wobei die konstanten $K_1$ bis $K_8$ und $P_1$ bis $P_8$ abgeschätzt werden durch:

(i) Lesen der Anlagendaten CC, AMM, AIR, ST, $G_{(exp)}$ und $H_{(exp)}$ für M Sätze von Punkten;
(ii) Erzeugen von Initialwerten für $K_1$ bis $K_4$ und $P_1$ bis $P_4$, Substituieren dieser Initialwerte in der Korrela-

tionsfunktion:

$$G_{(cal)} = K_1 [CC]^{P1} + K_2 [AMM]^{P2} + K_3 [AIR]^{P3} + K_4 [ST]^{P4}$$

und

Erzeugen von Initialwerten für $K_5$ bis $K_8$ und $P_5$ bis $P_8$, Substituieren dieser Initialwerte in der Korrelations-funktion:

$$H_{(cal)} = K_5 [CC]^{P5} + K_6 [AMM]^{P6} + K_7[AIR]^{P7} + K_8 [ST]^{P8}$$

(iii) Berechnen der Fehlerquadratminimierungsdifferenz ($\varphi$) zwischen $G_{(cal)}$ und $G_{(exp)}$; $H_{(cal)}$ und $H_{(exp)}$ für M Sätze von Punkten, und

(iv) Akzeptieren der abgeschätzten Konstanten, falls diese in akzeptablen Grenzen liegen oder Wiederholen der Schritte (b) und (c)
und

(c) Vorhersagen der Menge des während der Vergasung produzierten Gases in $Nm^3$/Kg Kohle, die zugeführt wurde, unter Verwendung der Korrelationsfunktion

$$G = K_1 [CC]^{P1} + K_2 [AMM]^{P2} + K_3 [AIR]^{P3} + K_4 [ST]^{P4}$$

Vorhersagen des Einheits-Wärmeinhalts des produzierten Gases in kcal/kg Kohle, die während der Vergasung zugeführt wurde, unter Verwendung der Korrelationsfunktion:

$$H = K_5 [CC]^{P5} + K_6 [AMM]^{P6} + K_7[AIR]^{P7} + K_8 [ST]^{P8}$$

**2.** Verfahren gemäß Anspruch 1, wobei die Werte der Konstanten, die in die Vorhersage einbezogen sind, $K_1$ bis $K_8$ und $P_1$ bis $P_8$ für einen speziellen Kohlevergasungsreaktor vorausberechnet werden.

**3.** Verfahren gemäß Anspruch 1, wobei die Werte der Konstanten, die in die Vorhersage einbezogen sind, $K_1$ bis $K_8$ und $P_1$ bis $P_8$ an einer Versuchsanlage berechnet werden.

**4.** Verfahren gemäß Anspruch 1, wobei die akzeptable Grenze in Schritt (b)(iv) $\pm$10% beträgt.

**Revendications**

**1.** Procédé de prédiction à l'avance d'une quantité de gaz combustible de faible valeur calorifique pouvant être produit pendant la gazéification de charbon dans un réacteur de gazéification de charbon et de la teneur en chaleur unitaire du gaz combustible ainsi produit, ledit procédé comprenant les étapes consistant à :

(a) obtenir des données du réacteur concernant :

(i) la teneur en carbone du charbon utilisé en % en poids (CC) ;
(ii) la teneur en matière minérale du charbon utilisé en % en poids (AMM) ;
(iii) la quantité d'air alimenté pour la gazéification en $Nm^3$/kg de charbon (AIR) ; et
(iv) la vapeur nécessaire en kg/kg de charbon utilisé (ST) ;

(b) estimer les valeurs des constantes impliquées dans la prédiction, $K_1$ à $K_8$ et $P_1$ à $P_8$, par une méthode de minimisation des moindres carrés, les valeurs des constantes $K_1$ à $K_8$ et $P_1$ à $P_8$ étant estimées par :

(i) la lecture des données de l'installation CC, AMM, AIR, ST, $G_{(exp)}$ et $H_{(exp)}$ pour un ensemble M de points ;
(ii) la détermination des estimations initiales pour $K_1$ à $K_4$ et $P_1$ à $P_4$, le remplacement de ces estimations initiales dans la fonction de corrélation :

$$G_{(cal)} = K_1 [CC]^{P1} + K_2 [AMM]^{P2} + K_3 [AIR]^{P3} + K_4 [ST]^{P4}$$

et la détermination des estimations initiales pour $K_5$ à $K_8$ et $P_5$ à $P_8$, le remplacement de ces estimations initiales dans la fonction de corrélation :

$$H_{(cal)} = K_5 [CC]^{P5} + K_6 [AMM]^{P6} + K_7 [AIR]^{P7} + K_8 [ST]^{P8}$$

(iii) le calcul de la différence des moindres carrés ($\varphi$) entre $G_{(cal)}$ et $G_{(exp)}$ ; et $H_{(cal)}$ et $H_{(exp)}$ pour un ensemble M de points ; et
(iv) l'acceptation des constantes estimées si elles sont dans les limites acceptables ou la répétition des étapes (b) et (c) ;
et

(c) prédire la quantité de gaz produite durant la gazéification en $Nm^3/kg$ de charbon alimenté en utilisant la fonction de corrélation :

$$G = K_1 [CC]^{P1} + K_2 [AMM]^{P2} + K_3 [AIR]^{P3} + K_4 [ST]^{P4}$$

prédire la teneur en chaleur unitaire du gaz produit en kcal/kg de charbon alimenté durant la gazéification en utilisant la fonction de corrélation :

$$H = K_5 [CC]^{P5} + K_6 [AMM]^{P6} + K_7 [AIR]^{P7} + K_8 [ST]^{P8}$$

2. Procédé selon la revendication 1, dans lequel les valeurs des constantes impliquées dans la prédiction, $K_1$ à $K_8$ et $P_1$ à $P_8$, sont précalculées pour un réacteur de gazéification de charbon particulier.

3. Procédé selon la revendication 1, dans lequel les valeurs des constantes impliquées dans la prédiction, $K_1$ à $K_8$ et $P_1$ à $P_8$, sont calculées sur une installation pilote.

4. Procédé selon la revendication 1, dans lequel dans l'étape (b)(iv), la limite acceptable est de $\pm$ 10 %.

**Figure 1**: The block diagram of the method used for estimating the constants involved in predicting the amount of gas produced

Read plant data CC, AMM, ST, AIR and Gexp for M set of points

Input initial guesses for $K_1$ to $K_4$ and $P_1$ to $P_4$

Correlation for calculation of G, Subroutine CORR
$G_{cal} = K_1 [CC]^{P1} + K_2 [AMM]^{P2} + K_3 [AIR]^{P3} + K_4 [ST]^{P4}$

Call CORR, estimate $G_{cal}$

Calculate
$\Phi = \Sigma_i (G_{cal} - G_{exp})^2$
For i = 1 to M

Use Standard Least Square Method to estimate $K_1$ to $K_4$ and $P_1$ to $P_4$

If $\Phi$ and estimates of constants are within acceptable limits, print the values of constants obtained.

Figure 2: The block diagram of the method used for estimating the constants involved in predicting the heat content of the gas produced

Read plant data CC, AMM, ST, AIR and Hexp for M set of points

Input initial guesses for $K_5$ to $K_8$ and $P_5$ to $P_8$

Correlation for calculation of H,
Subroutine CORR
$H_{cal} = K_5 [CC]^{P5} + K_6 [AMM]^{P6} + K_7 [AIR]^{P7} + K_8 [ST]^{P8}$

Call CORR, estimate $H_{cal}$

Calculate
$\Phi = \Sigma_i (H_{cal} - H_{exp})^2$
For i = 1 to M

Use Standard Least Square Method to estimate $K_5$ to $K_8$ and $P_5$ to $P_8$

If $\Phi$ and estimates of constants are within acceptable limits, print the values of constants obtained.

**Figure 3**: The block diagram of the method used for predicting the amount of gas produced

| |
|---|
| Input Data relating to CC, AMM, ST and AIR<br>Obtain $K_1$ to $K_4$ and $P^1$ to $P^4$ |

$\downarrow$

| |
|---|
| **Calculate G using the correlation function**<br>**$G = K_a [CC]^{P1} + K_2 [AMM]^{P2} + K_3 [AIR]^{P3} + K_4 [ST]^{P4}$** |

$\downarrow$

| |
|---|
| Print Value of G in $Nm^3$/kg of coal used |

Figure 4: The block diagram of the method used for predicting the heat content of the gas produced

Input Data relating to CC, AMM, ST and AIR
Obtain $K_5$ to $K_8$ and $P^5$ to $P^8$

$\downarrow$

**Calculate H using the correlation function**
$H = K_5 [CC]^{P5} + K_6 [AMM]^{P6} + K_7 [AIR]^{P7} + K_8 [ST]^{P8}$

$\downarrow$

Print Value of H in kcal/kg of coal used

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2906608 A, Jequier
- US 4023280 A, Schora
- US 4057402 A, Patel
- US 3636983 A, Keyser
- US 3693329 A, Willis
- US 2017043 A, Galliot
- US 5145490 A